# EUROPÄISCHE PATENTSCHRIFT

(11) **EP 4 049 010 B1**
(45) Veröffentlichungstag und Bekanntmachung des Hinweises auf die Patenterteilung: **29.11.2023**
(21) Anmeldenummer: 20761778.8
(22) Anmeldetag: 21.08.2020
(51) Int. Cl.: G01N 23/20016, G01N 23/207, G21K 1/06

(54) **RÖNTGENVORRICHTUNG MIT MEHREREN STRAHLPFADEN**
X-RAY DEVICE HAVING MULTIPLE BEAM PATHS
APPAREIL À RAYONS X À PLUSIEURS CHEMINS DE FAISCEAU

(30) Priorität: 21.10.2019 AT 509042019
(43) Veröffentlichungstag der Anmeldung: 31.08.2022
(73) Patentinhaber: Anton Paar GmbH, 8054 Graz (AT)
(72) Erfinder: GAUTSCH, Josef, 8044 Graz (AT); PRISCHNEGG, Roman, 8562 Mooskirchen (AT)
(74) Vertreter: Dilg, Haeusler, Schindelmann Patentanwaltsgesellschaft mbH
(86) Internationale Anmeldenummer: PCT/EP2020/073458
(87) Internationale Veröffentlichungsnummer: WO 2021/078424

(56) Entgegenhaltungen:
- EP-A2- 3 190 593
- US-A- 4 446 568
- US-A1- 2013 287 178

## Beschreibung

### Gebiet der Erfindung

Die vorliegende Erfindung betrifft eine Vorrichtung und ein Verfahren zur Röntgenuntersuchung einer Probe, wobei verschiedene Strahlpfade ausgewählt werden können.

### Technischer Hintergrund

Das Dokument DE 10 2015 226 101 A1 offenbart eine Röntgenoptik-Baugruppe für ein Röntgendiffraktometer, wobei verschiedene Strahlpfade für den Röntgenstrahl auswählbar sind. Wahlweise kann ein Blendensystem oder ein Monochromator in den Strahlengang hinein bewegt werden.

Das Dokument DE 10 2009 047 672 B4 offenbart einen röntgenoptischen Aufbau mit zwei fokussierenden Elementen, wobei durch Rotation eines geschlitzten Blendenblocks einer von zwei Röntgenstrahlen ausgewählt werden kann.

Das Dokument EP 1 324 023 B1 offenbart einen Röntgenbeugungsapparat mit verschiedenen Strahlpfaden für einen divergenten Röntgenstrahl und einen parallelen Röntgenstrahl. Mittels eines Schlitzgerätes ist einer von den beiden Röntgenstrahlen auswählbar.

Das Dokument US 2015/098547 A1 offenbart ein röntgenstrahloptisches Komponentengerät. Eine Röntgenquelle kann gegenüber einem Detektor verdreht werden.

Das Dokument EP 1 396 716 B1 offenbart ein röntgenoptisches System für Kleinwinkelstreuungsmessungen, wobei mittels Schlitzen, welche rotierbar sind, ein bestimmter Röntgenstrahl ausgewählt werden kann.

Das Dokument US 2017/336334 A1 offenbart ein Röntgentransmissionsspektrometersystem. Verschiedene Optiken können lateral verschoben werden, um sie wahlweise mit einem von verschiedenen Anodenzielbereichen der Röntgenquelle in Reihe anzuordnen.

Das Dokument DE 10141958 B4 offenbart ein Röntgendiffraktometer mit einer Röntgenquelle und einem Goniometer zum sequenziellen Einstellen aufeinanderfolgender relativer Winkelpositionen zwischen Röntgenquelle, Probe und einem Röntgendetektor. Die Röntgenstrahlung kann von einer Position 1 zu einer Position 2 von unterschiedlichen zwischen der Position 1 und Position 2 fest justierten umschaltbaren Strahlpfaden geführt werden. Die Umschaltung zwischen den unterschiedlichen Strahlpfaden wird durch eine relative Verdrehung einer Einheit bewirkt, welche von den unterschiedlichen Strahlpfaden gebildet ist. Dabei werden von der Röntgenquelle unter verschiedenen Winkeln ausgestrahlte Röntgenstrahlen für die unterschiedlichen Strahlpfade verwendet.

Dokument US 7,035,377 B2 offenbart einen Röntgenstrahlgenerator und ein Einstellungsverfahren, wobei eine Antikathode mehrere Antikathodenteile mit verschiedenen Materialien aufweist, welche umgeschaltet werden können, um sie einem Elektronenbeschuss auszusetzen. Ein optisches Element in dem Strahlengang kann gekippt werden, um verschiedene Röntgenstrahlen zu erzeugen, welche bei Beschuss der verschiedenen Antikathodenteile mittels des optischen Elements bei verschiedenen Verdrehungswinkeln erzeugt werden.

Das Dokument US 7,551,719 B2 offenbart eine Röntgenstrahlzoom-Linse für Kleinwinkelröntgenstreuung. Von einem Röntgenstrahl emittierte Röntgenstrahlung interagiert mit einem optischen Element und durchläuft ein Strahlselektionssystem, welches verschiebbare Platten aufweist.

Herkömmliche Röntgenuntersuchungsvorrichtungen, welche die Auswahl verschiedener Strahlpfade ermöglichen, weisen jedoch verschiedene Nachteile auf. Insbesondere ist die Intensität bzw. die Brillanz der verschiedenen Röntgenstrahlen entlang der verschiedenen Strahlpfade nicht in allen Fällen von hinreichender oder gewünschter Größe bzw. Qualität.

Es ist somit eine Aufgabe der vorliegenden Erfindung, eine Vorrichtung und ein Verfahren zur Röntgenuntersuchung einer Probe bereitzustellen, wobei eine Auswahl von Röntgenstrahlen bzw. Röntgenstrahlpfaden verschiedener Charakteristiken zur Interaktion mit der Probe ermöglicht ist, während ferner die Brillanz, Intensität, Performanz und/oder Flexibilität verbessert sind. Ferner soll eine derartige Vorrichtung bzw. Verfahren hinsichtlich der Handhabbarkeit vereinfacht werden, insbesondere eine automatisierte Betriebsweise erlauben.

### Zusammenfassung der Erfindung

Die Aufgabe wird durch die Gegenstände der unabhängigen Ansprüche gelöst. Die abhängigen Ansprüche spezifizieren besondere Ausführungsformen der vorliegenden Erfindung.

Gemäß einer Ausführungsform der vorliegenden Erfindung ist eine Vorrichtung zur Röntgenuntersuchung einer Probe bereitgestellt, wobei die Vorrichtung aufweist: ein Röntgenstrahlerzeugungssystem, mit: einer Röntgenquelle zum Erzeugen eines ursprünglichen Primärröntgenstrahls; einem Optiksystem mit einer ersten und mindestens einer zweiten Optikkomponente, die relativ zu der Röntgenquelle verfahrbar sind, um wahlweise die erste Optikkomponente in Interaktion mit dem ursprünglichen Primärröntgenstrahl zu bringen, woraufhin ein erster Primärröntgenstrahl erzeugt ist, der unter einem ersten Ablenkwinkel abgelenkt ist, oder die zweite Optikkomponente in Interaktion mit dem ursprünglichen Primärröntgenstrahl zu bringen, woraufhin ein zweiter Primärröntgenstrahl erzeugt ist, der unter einem zweiten Ablenkwinkel abgelenkt ist; und eine Drehvorrichtung mit einer Drehbühne, auf der das Röntgenstrahlerzeugungssystem montiert ist, um das Röntgenstrahlerzeugungssystem wahlweise um einen ersten Drehwinkel oder einen zweiten Drehwinkel um eine Drehbühnenachse zu verdrehen, um wahlweise den ersten Primärröntgenstrahl oder den zweiten Primärröntgenstrahl auf einen Probenbereich treffen zu lassen.

In besonderen Ausführungsformen kann das Optiksystem auch derart verfahren werden, dass keine Optikkomponente in Interaktion mit dem ursprünglichen Primärröntgenstrahl tritt und der ursprüngliche Primärröntgenstrahl ohne Wechselwirkung mit einer der Optikkomponenten durch das Optiksystem unabgelenkt hindurch tritt. In diesem Fall ist der Ablenkwinkel gleich null und der Drehwinkel kann auf einen vorbekannten Voreinstellungsdrehwinkel eingestellt werden.

Bei der Probe kann es sich um eine (zumindest teilweise) kristalline Probe, insbesondere einkristalline Probe, eine polykristalline Probe oder eine amorphe Probe handeln. Die Probe kann chemisch und/oder strukturell homogen oder inhomogen sein. Die Probe kann pulverförmig, flüssig oder gasförmig sein. Insbesondere kann es sich bei der Probe um eine feste Probe oder Feststoffprobe handeln. Die Probe kann insbesondere flächig ausgedehnt sein. Sie kann beispielsweise auf einem ebenen Substrat als eine dünne Schicht von einigen Mikrometern aufgebracht sein. Durch Bestrahlung der Probe mit dem ersten Primärröntgenstrahl oder dem zweiten Primärröntgenstrahl geht von der Probe jeweilige sekundäre Röntgenstrahlung aus, welche durch elastische Interaktion, insbesondere Beugung, an dem Material oder den Materialien der Probe hervorgerufen ist. Die Energie bzw. Wellenlänge der Sekundärröntgenstrahlung gleicht der Energie bzw. Wellenlänge der jeweiligen primären Röntgenstrahlung.

Der ursprüngliche Primärröntgenstrahl (und infolge auch der erste Primärröntgenstrahl bzw. der zweite Primärröntgenstrahl) kann monochromatische Röntgenstrahlung oder polychromatische Röntgenstrahlung (zum Beispiel in einem Energiebereich von 4,5 keV bis 22 keV) umfassen. Die Vorrichtung kann zur Aufnahme und Auswertung von Röntgendaten ausgebildet sein, welche Röntgenstreudaten für verschiedene Streuwinkel (Beugungswinkel) und/oder verschiedene Energien bzw. Wellenlängen umfassen. Die Röntgenquelle kann zum Erzeugen des ursprünglichen Primärröntgenstrahls eine Kathode aufweisen, von der Elektronen in Richtung auf eine Anode beschleunigt werden. Bei Auftreten der Elektronen auf die Anode der Röntgenquelle wird der ursprüngliche Primärröntgenstrahl erzeugt, welcher kontinuierliche Bremsstrahlung (mit verschiedenen Energien) und auch ein oder mehrere charakteristische Röntgenstrahlen umfassen kann. Von der Anode der Röntgenquelle können Röntgenstrahlen in verschiedenen Winkeln ausgehen. Mittels einer Aperturblende kann ein bestimmter Winkelbereich der von der Anode ausgehenden Röntgenstrahlen als der ursprüngliche Primärröntgenstrahl ausgewählt werden. Die Aperturblende kann fest oder verschiebbar relativ zur Anode der Röntgenquelle ausgebildet sein. Damit kann ein ursprünglicher Primärröntgenstrahl einer bestimmten Intensität bzw. Brillanz erzeugt sein. Um den ersten bzw. den zweiten Primärröntgenstrahl zu erzeugen, muss die Aperturblende der Röntgenquelle nicht in ihrer Position oder Öffnungsbreite verändert werden. In anderen Ausführungsformen kann die Position und/oder die Öffnungsbreite der optionalen Aperturblende der Röntgenquelle verschiedene Stellungen zur Erzeugung des ersten Primärröntgenstrahls bzw. des zweiten Primärröntgenstrahls einnehmen.

Das Optiksystem kann mindestens zwei Optikkomponenten oder noch mehr Optikkomponenten, etwa drei, vier, fünf, sechs oder zwischen zwei und zehn Optikkomponenten umfassen. Die Optikkomponenten können in einem Stapel oder in Reihe angeordnet sein, wobei die Optikkomponenten entlang einer Stapelrichtung verfahrbar sein können, um jeweils eine gewünschte (oder keine einzige) Optikkomponente in Interaktion mit dem ursprünglichen Primärröntgenstrahl zu bringen. Jede Optikkomponente kann ausgebildet sein, bei Interaktion mit dem ursprünglichen Primärröntgenstrahl durch elastische Wechselwirkung, insbesondere Beugung, den jeweiligen (ersten oder zweiten oder noch weitere) Primärröntgenstrahl zu erzeugen, welcher jeweils eine bestimmte Charakteristik hinsichtlich Brillanz und/oder Intensität und/oder Divergenz und/oder Wellenlänge usw. aufweisen kann. Durch die Möglichkeit, einen ersten Primärröntgenstrahl und mindestens einen zweiten Primärröntgenstrahl erzeugen zu können, ist ermöglicht, die Probe mit großer Flexibilität zu analysieren. Alternativ ist ermöglicht, verschiedene Proben durch die verschiedenen Primärröntgenstrahlen zu untersuchen.

Der erste bzw. zweite Ablenkwinkel kann als ein Winkel definiert sein, welcher zwischen dem ursprünglichen (mittleren) Primärröntgenstrahl und dem ersten bzw. dem zweiten (mittleren) Primärröntgenstrahl eingeschlossen ist. Die erste und die zweite Optikkomponente erzeugen somit einen ersten bzw. zweiten Primärröntgenstrahl, die unter verschiedenen Winkeln (relativ zu dem ursprünglichen Primärröntgenstrahl) abgelenkt sind. Die Charakteristiken (beispielsweise hinsichtlich der enthaltenen Wellenlängen oder Energien, hinsichtlich der Divergenz oder Konvergenz bzw. der Parallelität) des ersten bzw. zweiten Primärröntgenstrahls können verschieden sein.

Auf der Drehbühne sind (als Teile des Röntgenstrahlerzeugungssystems) sowohl die Röntgenquelle als auch das Optiksystem (in einer relativ zueinander festen Anordnung und Orientierung) montiert. Bei Verdrehen der Drehbühne wird somit sowohl die Röntgenquelle als auch das gesamte Optiksystem verdreht, Der erste Drehwinkel kann als eine Funktion bzw. in Abhängigkeit des ersten Ablenkwinkels definiert sein. Der zweite Drehwinkel kann als eine Funktion bzw. in Abhängigkeit des zweiten Ablenkwinkels definiert sein. Der erste bzw. zweite Drehwinkel kann zum Beispiel als eine Summe oder als eine Differenz des ersten bzw. zweiten Ablenkwinkels mit einem Bezugswinkel gegeben sein bzw. berechnet werden. Die Drehbühne kann zum Beispiel mittels eines Elektromotors (zum Beispiel Schrittmotors) um einen definierten Winkel verdreht werden. Die Verdrehung der Drehbühne kann automatisiert erfolgen, sobald eine bestimmte Optikkomponente (zum Beispiel die erste oder die zweite Optikkomponente) so verfahren worden ist, um in Interaktion mit dem ursprünglichen Primärröntgenstrahl zu treten. Jeder Optikkomponente des Optiksystems kann ein bestimmter Drehwinkel zugeordnet sein, um den die Drehbühne verdreht werden muss, um den jeweils von der jeweiligen Optikkomponente erzeugten Primärröntgenstrahl auf den Probenbereich treffen zu lassen.

Die Drehbühne kann zum Beispiel Montagebereiche zur Montage der Röntgenquelle und des Optiksystems aufweisen. Das Optiksystem braucht nicht relativ zu der Röntgenquelle verdrehbar zu sein. Aufgrund der Drehbarkeit der Drehbühne ist ermöglicht, verschiedene Primärröntgenstrahlen durch Verfahren der Optikkomponenten, welche in Interaktion gebracht mit dem ursprünglichen Primärröntgenstrahl werden, zu erzeugen, ohne zu erfordern, dass verschiedene ursprüngliche Primärröntgenstrahlen in verschiedenen Winkelbereichen von einer Anode der Röntgenquelle ausgehen. Damit kann die Brillanz bzw. Intensität der jeweiligen Primärröntgenstrahlen der verschiedenen Charakteristiken im Vergleich zu herkömmlichen Systemen verbessert werden bzw. auswählbar sein (etwa durch geeignete Einstellung einer Aperturaustrittsblende der Röntgenquelle).

Die Vorrichtung kann zur Röntgendiffraktometrie bzw. Röntgendiffraktion an der Probe ausgebildet sein. Insbesondere kann die Probe hinsichtlich ihrer Phasenzusammensetzung (zum Beispiel Anteile verschiedener Kristalltypen innerhalb der Probe eines oder mehrerer Materialien) quantitativ untersucht werden. Herkömmliche Röntgenuntersuchungsvorrichtungen weisen den Nachteil auf, dass die jeweils ausgebildeten Strahlpfade unter unterschiedlichen Austrittswinkeln aus der Röntgenquelle austreten. Herkömmlich kann somit nicht für alle Strahlpfade ein optimaler oder gewünschter Austrittswinkel festgehalten werden, um die verschiedenen Strahlpfade mit verschiedenen Charakteristiken der Röntgenstrahlung auszuwählen. Dieser Nachteil ist durch Ausführungsformen der vorliegenden Erfindung beseitigt.

Gemäß einer Ausführungsform der vorliegenden Erfindung ist ein Aufbau zur Röntgenuntersuchung bereitgestellt, der eine Röntgenquelle, ein (vorzugsweise linear) verstellbares Magazin mit mindestens zwei optischen Elementen und einen (zum Beispiel linear) verstellbaren Justierspalt umfasst. Diese Komponenten können eine fest verbundene Einheit bilden und können sich alle gemeinsam auf einem Dreharm (zum Beispiel der Drehbühne) befinden, der auf dem eigentlichen Goniometerarm für die Röntgenquelle sitzt und gegenüber diesem rotierbar ist.

Gemäß einer Ausführungsform der vorliegenden Erfindung ist die Drehbühnenachse parallel zu einer Goniometerachse ausgerichtet und der Probenbereich ist bei der Goniometerachse angeordnet. Insbesondere kann sowohl der erste Primärröntgenstrahl als auch der zweite Primärröntgenstrahl (bei entsprechender Verdrehung der Drehbühne) genau bzw. im Wesentlichen auf die Goniometerachse gerichtet sein. Wenn der erste bzw. der zweite Primärröntgenstrahl genau auf die Goniometerachse gerichtet ist, kann ein Beugungswinkel (auch als 2θ bezeichnet), das heißt eine Ablenkung eines Sekundärstrahls von der Richtung des ersten bzw. zweiten Primärröntgenstrahls, genau bestimmbar sein. Damit ist eine zuverlässige Aufnahme von sekundärer Röntgenstrahlung ermöglicht, welche unter verschiedenen Ablenkwinkeln von der Probe ausgeht. Die Drehbühnenachse kann ferner parallel zu einer Ablenkachse sein, um welche der erste Primärröntgenstrahl bzw. der zweite Primärröntgenstrahl relativ zu dem ursprünglichen Primärröntgenstrahl abgelenkt ist. Der erste bzw. der zweite Primärröntgenstrahl kann durch Verdrehung der Drehbühne genau auf den Probenbereich gerichtet werden. Die Ablenkung des ursprünglichen Primärröntgenstrahls durch die jeweilige Optikkomponente kann somit durch geeignete Verdrehung der Drehbühne kompensiert werden, um somit für alle Optikkomponenten des Optiksystems den jeweils erzeugten Primärröntgenstrahl auf den Probenbereich zu richten.

Gemäß einer Ausführungsform der vorliegenden Erfindung ist die Drehbühnenachse versetzt zur Goniometerachse angeordnet, insbesondere zwischen Röntgenstrahlerzeugungssystem und Goniometerachse angeordnet. Damit kann die Vorrichtung in einfacher Weise realisiert werden. In anderen Ausführungsformen kann die Drehbühnenachse genau bzw. im Wesentlichen genau mit der Goniometerachse zusammenfallen. Damit kann in noch genauerer Weise zum Beispiel eine Bragg-Brentano-Geometrie bei verschiedenen Verdrehungswinkeln der Drehbühne eingehalten werden.

Gemäß einer Ausführungsform der vorliegenden Erfindung ist ein Abstand zwischen der Röntgenquelle, insbesondere einem Elektronenzielbereich auf deren Anode, und der Drehbühnenachse zwischen 0,5 und 0,9 mal, insbesondere zwischen 0,6 und 0,8 mal, einem Abstand zwischen der Goniometerachse und der Röntgenquelle, insbesondere einem Elektronenzielbereich auf deren Anode. Bei Drehung der Drehbühne um die Drehbühnenachse ändert sich damit der Abstand zwischen dem Elektronenzielbereich und der Goniometerachse nur minimal. Damit ist bei verschiedenen Verdrehwinkeln der Drehbühne zum Beispiel eine Bragg-Brentano-Geometrie immer mit geringsten Abweichungen erfüllt. Damit kann zum Beispiel der Beugungswinkel genau bestimmbar sein.

Gemäß einer Ausführungsform der vorliegenden Erfindung ist eine Ablenkachse, um die der erste bzw. der zweite Primärröntgenstrahl relativ zum ursprünglichen Primärröntgenstrahl um den ersten bzw. den zweiten Ablenkwinkel abgelenkt werden, parallel zur Drehbühnenachse. Damit kann die Ablenkung des ursprünglichen Primärröntgenstrahls aufgrund der Interaktion mit der ersten Optikkomponente bzw. der zweiten Optikkomponente durch die Verdrehung der Drehbühne um die Drehbühnenachse so kompensiert werden, dass der jeweils erzeugte erste bzw. zweite Primärröntgenstrahl genau auf den Probenbereich auftrifft. Insbesondere können alle drei Achsen, das heißt die Drehbühnenachse, die Goniometerachse und die Ablenkachse, um die der erste bzw. der zweite Primärröntgenstrahl relativ zum ursprünglichen Primärröntgenstrahl abgelenkt werden, parallel (oder jedenfalls innerhalb von Fehlertoleranzen von unter z.B. 3°) zueinander sein.

Gemäß einer Ausführungsform der vorliegenden Erfindung weist die Vorrichtung ferner auf: einen Röntgendetektor; ein Goniometer mit einem ersten Arm und einem zweiten Arm, wobei der erste Arm und/oder der zweite Arm um die Goniometerachse verschwenkbar ist, wobei auf dem ersten Arm die Drehbühne mit dem Röntgenstrahlerzeugungssystem montiert ist und wobei auf dem zweiten Arm der Röntgendetektor montiert ist. Der Röntgendetektor ist ausgebildet und angeordnet, um sekundäre Röntgenstrahlung zu detektieren, welche von der Probe ausgeht, wenn sie von dem ersten bzw. dem zweiten Primärröntgenstrahl getroffen wird. Der Röntgendetektor kann zum Beispiel einen Punktdetektor (mit z.B. einem einzigen röntgenempfindlichen Sensorelement) umfassen, der auch als null-dimensionaler Detektor bezeichnet wird. Mittels des Goniometers kann ein Detektionsstreuwinkel (2θ) eingestellt werden, um sekundäre Röntgenstrahlung hinsichtlich ihrer Intensität zu detektieren, dessen Richtung von den (insbesondere bei fester Goniometereinstellung gleichen) Richtungen des ersten bzw. zweiten Primärröntgenstrahls aufgrund der Interaktion mit der Probe um den Detektionsstreuwinkel verschieden sind.

Ein Winkeldetektionsbereich des Röntgendetektors kann den Probenbereich, insbesondere einen Bereich um die Goniometerachse, umfassen bzw. überdecken. Damit ist sekundäre Röntgenstrahlung, die von der Goniometerachse oder einem Bereich darum herum ausgeht, von dem Röntgendetektor detektierbar. Der Röntgendetektor kann insbesondere ein energieauflösender Röntgendetektor, insbesondere Punktdetektor, sein, welcher sekundäre Röntgenstrahlung energieaufgelöst zu detektieren ausgebildet ist.

Der Röntgendetektor kann somit ausgebildet sein, Intensitäten von sekundärer Röntgenstrahlung verschiedener Energien zu detektieren. Mittels des Goniometers kann, durch Verschwenken des ersten Arms, ein Einfallswinkel des jeweiligen Primärröntgenstrahls auf die Probe eingestellt werden. In anderen Ausführungsformen kann der Röntgendetektor ein eindimensionaler (Zeilen-)Detektor oder ein zweidimensionaler (Flächen-) Detektor sein. Mittels Verschwenkens des zweiten Arms des Goniometers kann ein Ausfallwinkel der sekundären Strahlung relativ zu der Probe eingestellt werden. Die Summe von Einfallswinkel und Ausfallwinkel ergibt den Beugungswinkel oder Streuwinkel 2θ. Insbesondere kann zur Aufnahme von Röntgenstreudaten sowohl der erste Arm als auch der zweite Arm in gegensinniger Weise verschwenkt werden, um sowohl den Einfallswinkel als auch den Ausfallwinkel zu verändern. Mittels Verschwenkens des ersten Arms wird die gesamte Drehbühne, auf der das Röntgenstrahlerzeugungssystem montiert ist, um die Goniometerachse verschwenkt. Damit ist eine beugungswinkelabhängige Aufnahme von Sekundärröntgenstrahlung ermöglicht.

Gemäß einer Ausführungsform der vorliegenden Erfindung ist zumindest eine der Optikkomponenten ausgebildet, aus dem ursprünglichen Primärröntgenstrahl einen monochromatischen oder polychromatischen Primärröntgenstrahl zu erzeugen, der parallel oder divergent oder fokussierend (konvergent) oder kollimierend ist. Allgemein können eine oder mehrere der Optikkomponenten ausgebildet sein, die Charakteristik des ursprünglichen Primärröntgenstrahls hinsichtlich der Verteilung von Energien oder Wellenlängen und/oder hinsichtlich einer Divergenz oder Konvergenz oder Parallelität zu verändern. Damit ist ermöglicht, primäre Röntgenstrahlung verschiedener Charakteristiken auf die Probe zu richten, um diese auf verschiedenartige Weise untersuchen zu können oder verschiedene Proben durch verschiedene Primärröntgenstrahlen verschiedener Charakteristiken verbessert untersuchen zu können. Ein paralleler Primärröntgenstrahl kann mehrere Teilstrahlen umfassen, die jeweils parallel zueinander sind. Ein divergenter Primärröntgenstrahl kann mehrere Teilprimärröntgenstrahlen umfassen, welche in Fortschreiterichtung in mehreren Richtungen innerhalb eines Kegels auseinanderlaufen. Ein fokussierender oder kollimierender oder konvergenter Primärröntgenstrahl kann mehrere Teilprimärröntgenstrahlen umfassen, welche in einem Kegel oder kegelförmig in Fortschreiterichtung auf einen Punkt oder einen Bereich zusammenlaufen. Insbesondere können die Teilprimärröntgenstrahlen auf den Probenbereich oder die Goniometerachse fokussiert sein. Damit sind verschiedene Untersuchungsvarianten ermöglicht.

Gemäß einer Ausführungsform der vorliegenden Erfindung weist zumindest eine der Optikkomponenten auf: einen kollimierenden Röntgenspiegel, einen fokussierenden Röntgenspiegel, einen Vielschicht-Röntgenspiegel, einen Vielschicht-Monochromator, eine Einkristall-Optik, einen 1D-Spiegel, einen 2D-Spiegel. Somit sind herkömmlich verfügbare Optikkomponenten durch die Vorrichtung unterstützt und durch die Vorrichtung einsetzbar. Je nach Anwendungsfall können die Optikkomponenten geeignet ausgewählt und geeignet zum Beispiel in einem Stapel angeordnet werden.

Gemäß einer Ausführungsform der vorliegenden Erfindung sind die Optikkomponenten des Optiksystems relativ zu der Röntgenquelle linear und/oder im Wesentlichen senkrecht zum ursprünglichen Primärröntgenstrahl verfahrbar. Die Optikkomponenten können dabei derart angeordnet sein, dass, wenn eine bestimmte Optikkomponente, zum Beispiel die erste Optikkomponente, zur Interaktion mit dem ursprünglichen Primärröntgenstrahl angeordnet ist, alle andere Optikkomponenten von einer Interaktion mit dem ursprünglichen Primärröntgenstrahl abgeschattet bzw. blockiert sind. Weitere Blockierungsblenden können somit verzichtbar sein.

Mit anderen Worten: Das das Optik-Magazin kann durch lineares Verschieben so angeordnet werden, dass die oberhalb und/oder unterhalb der jeweiligen Optikkomponente eintreffende Strahlung von den anderen Optikkomponenten, die oberhalb und/oder unterhalb angeordnet sind, abgedeckt oder blockiert wird.

Damit muss kein beweglicher Schlitz oder Spalt erforderlich sein, mit dem wahlweise der eine Pfad ausgewählt und der andere abgeschirmt wird. Eine Größe der möglichen Ablenkungswinkel aufgrund der verschiedenen Optikkomponenten kann zum Beispiel zwischen 0° und 20° liegen, oder insbesondere zwischen 0° und 10° liegen.

Gemäß einer Ausführungsform der vorliegenden Erfindung weist das Optiksystem einen auf der Drehbühne montierten, relativ zur Röntgenquelle verschiebbaren Schlitten auf, auf dem die Optikkomponenten montiert sind, wobei der Schlitten insbesondere auf einer Schiene angeordnet und relativ zu der Schiene verfahrbar ist. Damit ist eine einfache Konstruktion bzw. Implementierung zur linearen Verschiebung der Optikkomponenten ermöglicht. Der Schlitten kann zum Beispiel mittels eines Elektromotors verfahren werden, welcher zum Beispiel eine Zahnschiene verschiebt, welche mit dem Schlitten verbunden ist. Andere Verfahrimplementierungen sind möglich.

Gemäß einer Ausführungsform der vorliegenden Erfindung sind die erste Optikkomponente und die zweite Optikkomponente wahlweise derart verfahrbar, dass der ursprüngliche Primärröntgenstrahl jeweils unter einem gleichen optimalen oder gewünschten Winkelbereich relativ zu einem Elektronenzielbereich auf der Anode der Röntgenquelle aus der Röntgenquelle austritt und auf die erste bzw. zweite Optikkomponente trifft. Es kann somit (hinsichtlich dessen Charakteristik, z.B. Intensität und/oder Brillanz) ein und derselbe ursprüngliche Primärröntgenstrahl verwendet werden, um sowohl (mittels Interaktion an der ersten Optikkomponente) den ersten Primärröntgenstrahl zu erzeugen als auch (mittels Interaktion an der zweiten Optikkomponente) den zweiten Primärröntgenstrahl zu erzeugen. Damit kann insbesondere eine gewünschte hohe Intensität oder eine gewünschte Brillanz sowohl des ersten Primärröntgenstrahls als auch des zweiten Primärröntgenstrahls erhalten werden. Herkömmlich wurden verschiedene Teile eines in einem weiten Winkelbereich abstrahlenden Primärröntgenstrahls verwendet, um verschiedene stromabwärts erzeugte Primärröntgenstrahlen zu erzeugen. Dazu war auch eine Justage der verschiedenen Teile des Primärröntgenstrahls erforderlich. Ausführungsformen der vorliegenden Erfindung vermeiden die Justage mehrerer Teile eines Primärröntgenstrahls, der von der Röntgenquelle ausgeht. Es reicht, einen einzigen ursprünglichen Primärröntgenstrahl hinsichtlich z.B. seiner Intensität, Brillanz und Divergenz bzw. Querschnittsfläche einzustellen, um sowohl den ersten als auch den zweiten Primärröntgenstrahl mittels Interaktion an der ersten bzw. zweiten Optikkomponente zu erzeugen.

Gemäß einer Ausführungsform der vorliegenden Erfindung ist zumindest eine der Optikkomponenten um eine Optikdrehachse parallel zur Drehbühnenachse verdrehbar. Eine Verdrehung zumindest einer der Optikkomponenten kann ferner erlauben, die Charakteristik des von dieser Optikkomponente erzeugten Primärröntgenstrahls wie gewünscht einzustellen bzw. zu verändern. Damit ist weitere Flexibilität zur Durchführung von Röntgenuntersuchungsexperimenten ermöglicht. Die Drehwinkel der Drehbühne können ferner in Abhängigkeit der optionalen Verdrehung der zumindest einen Optikkomponente oder des gesamten Optiksystems eingestellt werden, insbesondere in automatisierter Weise.

Gemäß einer Ausführungsform der vorliegenden Erfindung wird der ursprüngliche Primärröntgenstrahl hinter (stromabwärts) einem Austritt aus der Röntgenquelle und vor (stromaufwärts) Eintritt in das Optiksystem nicht abgelenkt. In dem Bereich stromabwärts der Röntgenquelle und stromaufwärts des Optiksystems brauchen somit keine optischen Komponenten angeordnet zu sein. Damit kann die Vorrichtung ferner vereinfacht werden und Absorption vermindert werden.

Gemäß einer Ausführungsform der vorliegenden Erfindung weist die Vorrichtung ferner auf: eine Aperturblende, im Wesentlichen senkrecht zum ersten und/oder zweiten Primärröntgenstrahl bezüglich Aperturposition und/oder Aperturgröße veränderbar, insbesondere höhenverstellbar und/oder breitenverstellbar, die stromabwärts des Optiksystems auf der Drehbühne montiert ist, insbesondere zwischen dem Optiksystem und der Drehbühnenachse angeordnet. Die Aperturblende ermöglicht eine Einstellung der Querschnittsgröße und/oder Querschnittsform des jeweiligen Primärröntgenstrahls stromabwärts der Aperturblende und stromaufwärts des Probenbereichs. Je nachdem, welche Optikkomponente in Interaktion mit dem ursprünglichen Primärröntgenstrahl gebracht wird, kann die Aperturblende bezüglich Aperturposition und/oder Aperturgröße eingestellt werden. In anderen Ausführungsformen sind sowohl Aperturposition und/oder Aperturgröße für verschiedene Optikkomponenten gleich gewählt. Damit ist eine größere Flexibilität hinsichtlich der Charakteristik des jeweiligen Primärröntgenstrahls ermöglicht.

Gemäß einer Ausführungsform der vorliegenden Erfindung ist der ursprüngliche Primärröntgenstrahl durch Beschuss eines einzigen Elektronenzielbereichs auf einer Anode der Röntgenquelle erzeugt, um aus dem ursprünglichen Primärröntgenstrahl sowohl den ersten als auch den zweiten Primärröntgenstrahl zu erzeugen, wenn die erste bzw. die zweite Optikkomponente von dem ursprünglichen Primärröntgenstrahl getroffen wird. Von einer Kathode emittierte Elektronen können durch eine Hochspannung auf den Elektronenzielbereich beschleunigt werden. Die Anode kann in dem Elektronenzielbereich einen ebenen Abschnitt aufweisen. Der ursprüngliche Primärröntgenstrahl kann von diesem ebenen Bereich (z.B. als Strahlbündel) unter verschiedenen Ausfallwinkeln ausgehen. Die oben erwähnte optionale Aperturblende der Röntgenquelle kann einen bestimmten Ausfallwinkelbereich der von der Anode ausgehenden Röntgenstrahlen auswählen (austreten lassen), um den ursprünglichen Primärröntgenstrahl zu bilden. Der Ausfallwinkelbereich kann je nach Anwendung gewählt werden, insbesondere um eine möglichst hohe (niedrige) Intensität oder zum Beispiel eine hohe (niedrige) Brillanz des ursprünglichen Primärröntgenstrahls zu erhalten. Die Charakteristik des ursprünglichen Primärröntgenstrahls kann somit für die Erzeugung des ersten Primärröntgenstrahls und des zweiten Primärröntgenstrahls gleich sein. Damit kann zum Beispiel wahlweise eine höhere Intensität oder eine höhere Brillanz sowohl des ersten als auch des zweiten Primärröntgenstrahls erreicht werden, als im Stand der Technik für verschiedene Röntgenstrahlen verschiedener Charakteristiken erreichbar waren.

Gemäß einer Ausführungsform der vorliegenden Erfindung sind die Röntgenquelle, insbesondere der Elektronenzielbereich auf deren Anode, der Röntgendetektor und der Probenbereich im Wesentlichen in Bragg-Brentano-Geometrie angeordnet. Dabei kann ein Abstand der Anode der Röntgenquelle von der Goniometerachse bis auf eine Fehlertoleranz dem Abstand zwischen dem Eintrittsfenster des Detektors und der Goniometerachse gleichen. Ist ferner der Abstand zwischen der Drehbühnenachse und der Goniometerachse im Vergleich zu diesem Abstand (Radius) zwischen Anode der Röntgenquelle und Goniometerachse relativ klein, so wird die Bragg-Brentano-Geometrie kaum geändert, wenn die Drehbühne um die Drehbühnenachse verdreht wird, jedenfalls innerhalb eines Drehwinkelbereichs, der zum Beispiel zwischen 0° und 10° oder zwischen 0° und 5° liegt. Damit können Einstellungsfehler vermindert werden.

Gemäß einer Ausführungsform der vorliegenden Erfindung weist die Vorrichtung ferner eine Steuerung auf, die ausgebildet ist, in Abhängigkeit eines Verfahrweges der Optikkomponenten einen Drehwinkel der Drehbühne einzustellen. Die Steuerung kann alternativ oder zusätzlich ausgebildet sein, den Drehwinkel der Drehbühne in Abhängigkeit derjenigen Optikkomponente einzustellen, welche in Interaktion mit dem ursprünglichen Primärröntgenstrahl gebracht ist. Damit kann eine automatisierte Umschaltung zwischen verschiedenen Primärröntgenstrahlen in automatisierter Weise erfolgen.

Die Vorrichtung kann ferner eine Probenhalterung aufweisen, die ausgebildet ist, die Probe in dem Probenbereich zu haltern. Insbesondere kann die Probe flächig auf einem ebenen Substrat aufgebracht sein, so dass die Probe idealerweise einen Bereich mit der Goniometerachse gemeinsam hat.

Es sollte verstanden werden, dass Merkmale, welche individuell oder in irgendeiner Kombination im Zusammenhang mit einer Vorrichtung zur Röntgenuntersuchung erwähnt, beschrieben oder bereitgestellt sind, ebenso, individuell oder in irgendeiner Kombination, auf ein Verfahren einer Röntgenuntersuchung einer Probe anwendbar sind, gemäß Ausführungsformen der vorliegenden Erfindung und umgekehrt.

Gemäß einer Ausführungsform der vorliegenden Erfindung ist ein Verfahren einer Röntgenuntersuchung einer Probe bereitgestellt, wobei das Verfahren aufweist: Erzeugen eines ursprünglichen Primärröntgenstrahls mittels einer Röntgenquelle eines Röntgenstrahlerzeugungssystems, das ferner ein Optiksystem mit einer ersten Optikkomponente und mindestens einer zweiten Optikkomponente, die relativ zu der Röntgenquelle verfahrbar sind, aufweist; in Interaktion Bringen der ersten Optikkomponente des Optiksystems mit dem ursprünglichen Primärröntgenstrahl, um einen ersten Primärröntgenstrahl zu erzeugen, der unter einem ersten Ablenkwinkel abgelenkt ist, wobei eine Drehvorrichtung eine Drehbühne aufweist, auf der das Röntgenstrahlerzeugungssystem montiert ist und die bei einem ersten Drehwinkel eingestellt ist, um den ersten Primärröntgenstrahl auf einen Probenbereich treffen zu lassen; und insbesondere Erfassen von ersten Beugungsdaten.

Ferner umfasst das Röntgenuntersuchungsverfahrenwrrfwsw : Verfahren der ersten Optikkomponente und der zweiten Optikkomponente des Optiksystems relativ zu der Röntgenquelle, um die zweite Optikkomponente in Interaktion mit dem ursprünglichen Primärröntgenstrahl zu bringen, um einen zweiten Primärröntgenstrahl zu erzeugen, der unter einem zweiten Ablenkwinkel abgelenkt ist; und Verdrehen der Drehbühne auf einen zweiten Drehwinkel um eine Drehbühnenachse, um den zweiten Primärröntgenstrahl auf den Probenbereich treffen zu lassen; und insbesondere Erfassen von zweiten Beugungsdaten.

Sowohl das Erfassen der ersten Beugungsdaten als auch das Erfassen der zweiten Beugungsdaten kann ferner ein Verschwenken des Röntgendetektors und/oder der Röntgenquelle mittels Verschwenkens des ersten Arms und/oder des zweiten Arms des Goniometers aufweisen, um Sekundärröntgenstrahlung mittels des Röntgendetektors zu detektieren, welche unter verschiedenen Beugungswinkeln (2θ) von der Probe ausgeht.

### Kurze Beschreibung der Zeichnungen

Fig. 1 illustriert schematisch eine Vorrichtung zur Röntgenuntersuchung einer Probe gemäß einer Ausführungsform der vorliegenden Erfindung;
Fig. 2 illustriert schematisch die in Fig. 1 illustrierte Vorrichtung in einer ersten Konfiguration;
Fig. 3 illustriert schematisch die in Fig. 1 illustrierte Vorrichtung in einer zweiten Konstellation;
Fig. 4 illustriert einen Detailausschnitt der Fig. 3;
Fig. 5 illustriert schematisch die in Fig. 1 illustrierte Vorrichtung in einer dritten Konstellation;
Fig. 6 illustriert schematisch eine Vorrichtung zur Röntgenuntersuchung gemäß einer weiteren Ausführungsform der vorliegenden Erfindung; und
Fig. 7 illustriert die Intensität von ursprünglicher primärer Röntgenstrahlung in Abhängigkeit eines Austrittswinkels.

### Detaillierte Beschreibung von Ausführungsformen

In Struktur und/oder Funktion gleich Elemente sind in den Figuren mit ähnlichen Bezugszeichen gezeichnet, die sich höchstens in der ersten Ziffer unterscheiden.

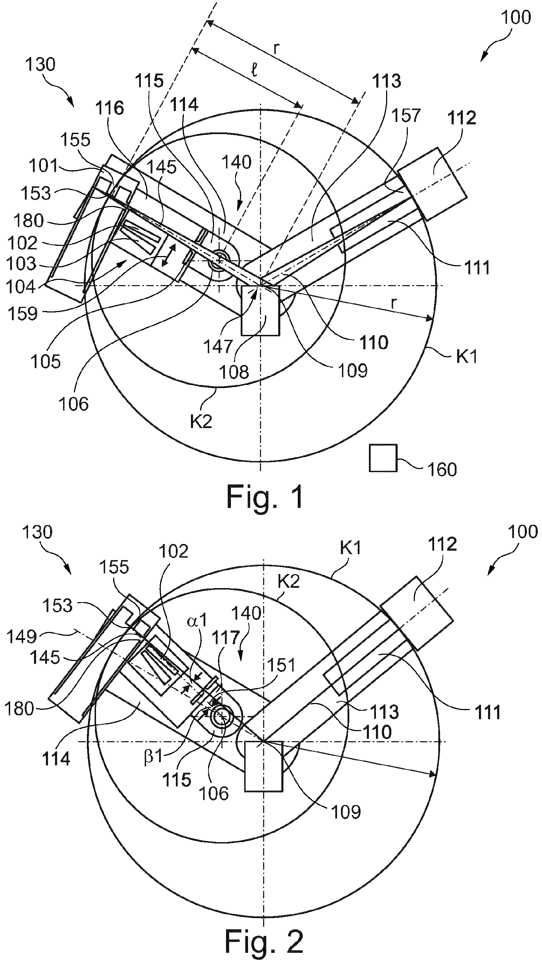

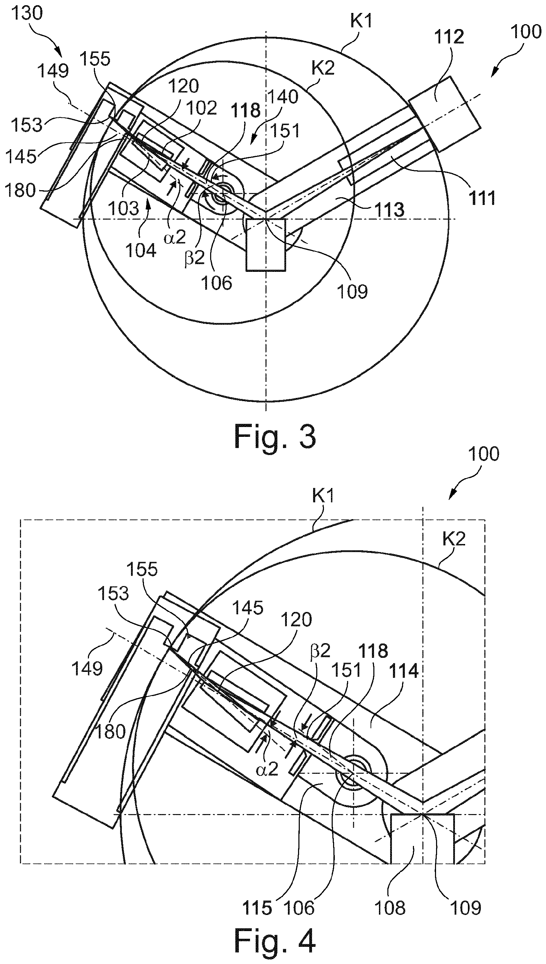

Die in Fig. 1 schematisch illustrierte Vorrichtung 100 zur Röntgenuntersuchung einer Probe (nicht dargestellt), welche auf einem Probenträger 108 gehaltert ist, umfasst ein Röntgenstrahlerzeugungssystem 130 und eine Drehvorrichtung 140. Das Röntgenstrahlerzeugungssystem 130 umfasst eine Röntgenquelle 101 zum Erzeugen eines ursprünglichen Primärröntgenstrahls 145 und ein Optiksystem 104 (in einem Röntgenoptikgehäuse 116) mit einer ersten Optikkomponente 102 und mindestens einer zweiten Optikkomponente 103, die relativ zu der Röntgenquelle 101 verfahrbar sind. Damit ist ermöglicht, wahlweise die erste Optikkomponente 102 in Interaktion mit dem ursprünglichen Primärröntgenstrahl 145 zu bringen, worauf ein erster Primärröntgenstrahl 117 (illustriert in Fig. 2) erzeugt ist, der unter einem ersten Ablenkwinkel α1 (relativ zu dem ursprünglichen Primärröntgenstrahl 145) abgelenkt ist, oder die zweite Optikkomponente 103 in Interaktion mit dem ursprünglichen Primärröntgenstrahl 145 zu bringen, woraufhin ein zweiter Primärröntgenstrahl 118 (illustriert in Fig. 3) erzeugt ist, der unter einem zweiten Winkel α2 relativ zu dem ursprünglichen Primärröntgenstrahl 145 abgelenkt ist.

Die Drehvorrichtung 140 umfasst eine Drehbühne 115, auf der das Röntgenstrahlerzeugungssystem 130 montiert ist, um das Röntgenstrahlerzeugungssystem 130 wahlweise um einen ersten Drehwinkel β1 oder einen zweiten Drehwinkel β2 (siehe Fig. 2 und Fig. 3) um eine Drehbühnenachse 106 zu verdrehen, um wahlweise den ersten Primärröntgenstrahl 117 oder den zweiten Primärröntgenstrahl 118 auf einen Probenbereich 147 (auf dem Probenträger 108) treffen zu lassen. Die Drehbühnenachse 106 ist senkrecht zur Zeichenebene angeordnet und ausgerichtet. Dabei ist der erste bzw. der zweite Ablenkwinkel α1, α2 als der Winkel definiert, um den der erste bzw. der zweite Primärröntgenstrahl 117, 118 gegenüber dem ursprünglichen Primärröntgenstrahl 145 abgelenkt ist. Der erste bzw. der zweite Drehwinkel β1, β2 ist als der Winkel zwischen einer Zentralachse 149 eines ersten Goniometerarms 114 und einer Mittelachse 151 (siehe Fig. 2, 3, 4) der Drehbühne 115 definiert.

Ein Goniometer der Vorrichtung 100 umfasst den ersten Goniometerarm 114 und einen zweiten Goniometerarm 113, wobei der erste Goniometerarm 114 und der zweite Goniometerarm 113 um eine Goniometerachse 109 verschwenkbar sind. Die Goniometerachse 109 ist senkrecht zur Zeichenebene angeordnet und ausgerichtet. Dabei ist auf dem ersten Goniometerarm 114 die Drehbühne 115 mit dem Röntgenstrahlerzeugungssystem 130 montiert und auf dem zweiten Goniometerarm 113 ist ein Röntgendetektor 112 montiert. Die Drehbühnenachse 106 ist parallel zu der Goniometerachse 109 angeordnet und der Probenbereich 147 ist bei der Goniometerachse 109 angeordnet. Die Drehbühnenachse 106 ist versetzt zur Goniometerachse 109 angeordnet, und befindet sich zwischen dem Röntgenstrahlerzeugungssystem 130 und der Goniometerachse 109.

Die Röntgenquelle 101 weist eine Anode 155 mit einem Elektronenzielbereich 153 auf der Anode auf. Eine nicht-illustrierte Kathode emittiert Elektronen, welche zu dem Elektronenzielbereich 153 auf der Anode 155 beschleunigt werden und dort auftreffen. Ein Abstand I (siehe Fig. 1) zwischen dem Elektronenzielbereich 153 auf der Anode 155 der Röntgenquelle 101 und der Drehbühnenachse 106 beträgt zwischen 0,5 und 0,9 mal einen Abstand r zwischen der Goniometerachse 109 und dem Elektronenzielbereich 153 der Anode 155 der Röntgenquelle 101. Auch ein Detektoreintrittsbereich 157 des Detektors 112 ist um den Abstand r von der Goniometerachse 109 entfernt.

Somit sind die Röntgenquelle 101, der Röntgendetektor 112 und der Probenbereich 147 in der Bragg-Brentano-Geometrie angeordnet.

Die Optikkomponenten 102, 103 (und optional weitere Optikkomponenten des Optiksystems 104) sind relativ zu der Röntgenquelle 101 linear entlang der Pfeile 159 im Wesentlichen senkrecht zum ursprünglichen Primärröntgenstrahl 145 verfahrbar. Wie aus Fig. 1, 2, 3, 4, 5, 6 hervorgeht, wird der ursprüngliche Primärröntgenstrahl 145 stromabwärts des Austritts aus der Röntgenquelle 101 und stromaufwärts des Optiksystems 104 nicht durch irgendeine andere optische Komponente abgelenkt oder auf andere Weise verändert oder beeinflusst.

Wie zum Beispiel in Fig. 1 illustriert ist, weist die Vorrichtung 100 ferner eine Aperturblende 105 auf, welche im Wesentlichen senkrecht zum ersten und/oder zweiten Primärröntgenstrahl 117 bzw. 118 bezüglich der Aperturposition und/oder Aperturgröße veränderbar ist. Die Aperturblende 105 ist stromabwärts des Optiksystems 104 montiert, insbesondere zwischen dem Optiksystem 104 und der Drehbühnenachse 106.

Die Vorrichtung 100 ist in Fig. 2 und Fig. 3 in zwei verschiedenen Konstellationen illustriert, wobei in Fig. 2 die erste Optikkomponente 102 in Interaktion mit dem ursprünglichen Primärröntgenstrahl 145 gebracht ist, um den ersten Primärröntgenstrahl 117 zu erzeugen. Demgegenüber ist in Fig. 3 die zweite Optikkomponente 103 in Interaktion mit dem ursprünglichen Primärröntgenstrahl 145 gebracht, um den zweiten Primärröntgenstrahl 118 zu erzeugen. Jedoch ist jeweils ein und derselbe ursprüngliche Primärröntgenstrahl 145 durch Beschuss eines einzigen Elektronenzielbereichs 153 auf der Anode 155 der Röntgenquelle 101 erzeugt bzw. verwendet, um sowohl den ersten Primärröntgenstrahl 117 als auch den zweiten Primärröntgenstrahl 118 zu erzeugen.

Die Vorrichtung 100 umfasst ferner eine Steuerung 160, die (durch nicht-illustrierte Steuerleitungen und einen Prozessor) ausgebildet ist, in Abhängigkeit eines Verfahrweges (entlang der Pfeile 159) der Optikkomponenten 102, 103 (und weiterer optionaler Optikkomponenten) einen Drehwinkel β der Drehbühne 115 einzustellen. Die Probenhalterung 108 ist ausgebildet, die Probe (nicht dargestellt) in dem Probenbereich 147 zu haltern. In beiden in Fig. 2 und 3 illustrierten Konfigurationen tritt der ursprüngliche Primärröntgenstrahl 145 jeweils unter einem gleichen optimalen oder gewünschten Winkelbereich relativ zu dem Elektronenzielbereich 153 auf der Anode 155 der Röntgenquelle 101 aus der Röntgenquelle 101 aus (begrenzt durch Apertur 180), um auf die erste bzw. die zweite Optikkomponente 102, 103 zu treffen.

Fig. 4 zeigt einen Detailausschnitt der Fig. 3, wobei sowohl die Mittelachse 149 des ersten Goniometerarms 114 als auch eine Mittelachse 151 der Drehbühne 114 illustriert sind sowie der zweite Ablenkwinkel α2 und auch der zweite Drehwinkel β2.

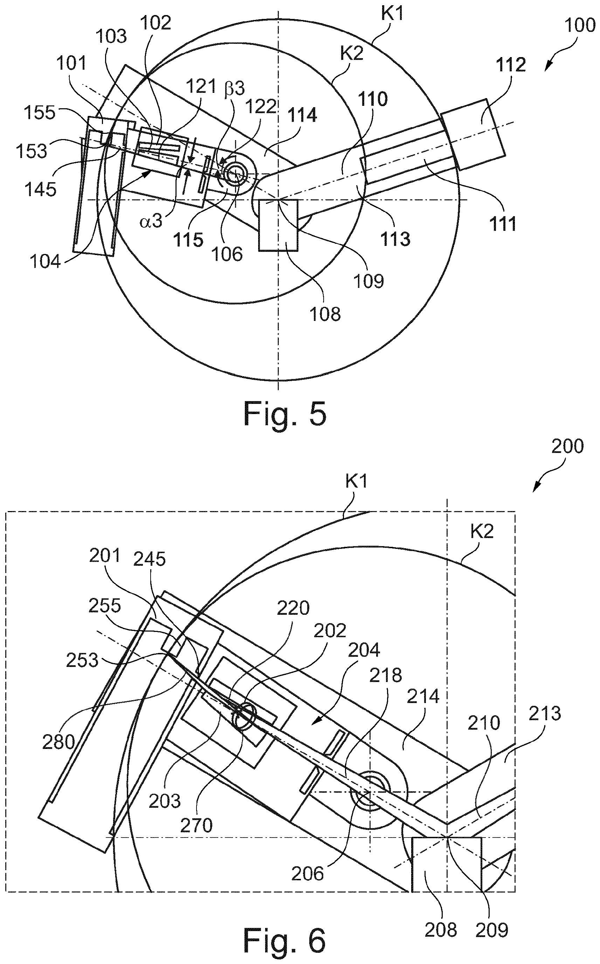

Fig. 5 illustriert die in Fig. 1 illustrierte Vorrichtung 100 in einer dritten Konstellation, wobei die zweite Optikkomponente 103 derart verfahren ist, dass der ursprüngliche Primärröntgenstrahl 145 die zweite Optikkomponente 103 von einer Rückseite 121 trifft, woraufhin ein dritter Primärröntgenstrahl 122 erzeugt ist, welcher um einen dritten Ablenkwinkel a3 relativ zum ursprünglichen Primärröntgenstrahl 145 abgelenkt ist und auf die Probe trifft. Dabei ist die Drehbühne 115 um einen dritten Drehwinkel β3 verdreht, welcher ungleich dem ersten Drehwinkel und dem zweiten Drehwinkel β1, β2 ist.

Die in Fig. 1 illustrierte Vorrichtung 100 umfasst somit eine Röntgenquelle 101 und ferner eine direkt dahinter sitzendes, senkrecht zum Strahlengang verschiebbares Optiksystem 104 (auch als Optik-Magazin oder Schlitten bezeichnet). In diesem Optik-Magazin bzw. dem Schlitten befinden sich mehrere optische Bauteile oder Elemente. Zwischen der Röntgenquelle 101 und dem Optik-Magazin 104 sind keine weiteren optischen Bauteile angeordnet. Somit handelt es sich bei den Optik-Magazinen um eine Primäroptik, die verschiebbar ist. Eine Drehbühne 115 (auch als weiterer Goniometerarm bezeichnet), der auf dem eigentlichen (quellenseitigen) Goniometerarm 114 montiert ist, ist um die Drehbühnenachse 106 verdrehbar. Diese Drehbühnenachse 106 der Drehbühne 115 befindet sich möglichst nahe an der Goniometerachse 109 des Goniometerarms 114. Die Aperturblende (auch als Divergenzschlitz bzw. Justierspalt bezeichnet) 105 ist stromabwärts des Optiksystems 104 angeordnet. Beide Seitenelemente des Divergenzschlitzes sind individuell steuerbar. Damit kann sowohl die Breite (Apertur) als auch die vertikale Position des Schlitzes variiert werden. Mit vertikal ist dabei eine Position im Wesentlichen senkrecht zum Strahlengang gemeint. Bei den optischen Elementen des Optiksystems 104 kann es sich beispielsweise um Multilayer-Monochromatoren, fokussierende oder kollimierende Spiegel, 1D- oder 2D-Spiegel oder Einkristalloptiken (zum Beispiel Channel-Cut) handeln. Auch eine Kombination von zwei oder mehr Bauteilen an einer Position (zum Beispiel ein Spiegel und ein Monochromator) ist möglich. Optional können sich zwischen dem Optiksystem 104 und der Aperturblende 105 weitere optische Elemente befinden (zum Beispiel Soller-Schlitze, strahlbegrenzende Elemente etc.). Die Elemente 101, 102, 103, 104, 105, 115, 116 können eine fest verbundene Einheit bilden und sind drehbar um die Drehbühnenachse 106 montiert.

Es können alternativ innerhalb des Optiksystems mehrere Spiegel mit mehreren unterschiedlichen Neigungswinkeln eingebaut sein. Alternativ oder zusätzlich kann ein einzelner, dafür aber drehbarer Spiegel verwendet werden, wie schematisch zum Beispiel in Fig. 6 illustriert ist. Dabei ist zum Beispiel die zweite Optikkomponente 203 um eine Achse senkrecht zur Zeichenebene, beispielsweise um 180°, drehbar, wie durch die Pfeile 270 angedeutet ist. Damit kann der für die Röntgenquelle 201 optimale Austrittswinkel gewählt werden, unter dem der ursprüngliche Primärröntgenstrahl 245 relativ zu dem Elektronenzielbereich 253 der Anode 255 ausgeht. Man kann zum Beispiel den Winkelbereich derart einstellen, dass die Brillanz des ursprünglichen Primärröntgenstrahls 245 hoch ist und die Intensität gering ist (bei kleinem Winkel) oder umgekehrt (bei großem Winkel). Gemäß Ausführungsformen der vorliegenden Erfindung kann ein Primärröntgenstrahl, welcher auf die Probe trifft, begrenzt werden, monochromatisiert werden, fokussiert werden, kollimiert werden etc. Das Optiksystem 104 bzw. 204 kann durch lineares Verschieben so durchgeschaltet werden, dass die oberhalb und unterhalb (der jeweiligen Optikkomponente) streuende Strahlung von den anderen optischen Elementen, die oberhalb und unterhalb sitzen, abgedeckt bzw. blockiert wird. Daher kann auf einen beweglichen Schlitz oder einen Spalt, wie im herkömmlichen Stand der Technik verwendet, verzichtet werden, mit dem herkömmlicherweise wahlweise ein Strahlungspfad ausgewählt wurde und ein anderer Strahlungspfad ausgeblendet wurde.

In der ersten Konfiguration, welche in Fig. 2 illustriert wird, wird ein paralleler erster Primärröntgenstrahl 117 erzeugt, wobei die erste Optikkomponente als ein Röntgenspiegel so in dem ursprünglichen Primärröntgenstrahl 145 positioniert wird, dass die Reflexionsbedingung erfüllt ist. Der erste Primär,röntgenstrahl 117 wird an der Spiegeloberfläche des Röntgenspiegels 102 umgelenkt. Dieser Umlenkwinkel α1 wird durch die Verdrehung der Drehbühne 115 um den ersten Drehwinkel β1 korrigiert, um den ersten Primärröntgenstrahl 117 möglichst genau auf die Goniometerachse 109 bzw. auf die (nicht dargestellte) Probe zu richten.

Bei der in Fig. 3 illustrierten zweiten Konfiguration wird der zweite Primärröntgenstrahl 118 durch Reflexion des ursprünglichen Primärröntgenstrahls 145 an einem ebenen Röntgenspiegel 103 erzeugt (genauer an der Spiegelfläche 120 des ebenen Vielschichtspiegels 103). Daher hat der zweite Primärröntgenstrahl 118 dieselbe Divergenz wie der ursprüngliche Primärröntgenstrahl 145. Dies ermöglicht eine Messung mit der Bragg-Brentano-Geometrie. In diesem Fall sollte sich der Elektronenzielbereich 153 der Anode 155 der Röntgenquelle 101 möglichst exakt auf dem Radius r des Diffraktometers (gebildet durch den Abstand der Goniometerachse 109 des Diffraktometers zum Elektronenzielbereich 153 der Anode 155), das heißt auf dem Kreis K1 befinden. Der Radius I des Kreises K2, der die Orte des Elektronenzielbereichs 153 bei Drehung der Drehbühne 115 zeigt, sollte möglichst groß sein, beispielsweise 2/3 des Abstands r. Damit ändert sich der Abstand vom Brennfleck 153 auf der Anode 155 zur Goniometerachse 109 trotz Winkelkorrektur nur minimal, da sich die beiden Kreise K1, K2 tangieren und auch nicht sehr unterschiedliche Radien (r, l) aufweisen. Im Stand der Technik wird dagegen eine lineare Verschiebung durchgeführt, was jedoch zu einer größeren Abweichung von der Bragg-Brentano-Geometrie führt, als es durch Ausführungsformen der vorliegenden Erfindung ermöglicht ist.

Bei der dritten Konfiguration, welche in Fig. 5 illustriert ist, wird ein fokussierender dritter Primärröntgenstrahl 122 durch Wechselwirkung des ursprünglichen Primärröntgenstrahls 145 mit der Rückseite 121 der zweiten Optikkomponente 103 erzeugt. Die Röntgenspiegel oder Monochromatoren des Optiksystems 104 können so ausgebildet und angeordnet werden, dass der optimale Austrittswinkel des ursprünglichen Primärröntgenstrahls 145 zur Anode der Röntgenquelle ausgewählt wird. Der Brennfleck (Elektronenzielbereich) 153 auf der Anode 155 der Röntgenquelle 101 hat eine gewisse räumliche Ausdehnung. Ist der Take-off-Winkel (Austrittswinkel) sehr klein, dann verringert sich die projizierte Fläche des Brennflecks, weswegen der Strahl brillanter wird. Jedoch verringert sich die Intensität.

Alternativ oder zusätzlich zu einer Vielzahl von optischen Komponenten innerhalb des Optiksystems 104 kann ein drehbarer Spiegel 203 verwendet werden, wie in Fig. 6 illustriert ist. Damit kann ein für die Röntgenquelle optimaler Austrittswinkel gewählt werden. Zum Beispiel kann durch Verdrehung entlang der Pfeile 270 der Spiegel 203 so verdreht werden, dass ein zweiter Primärröntgenstrahl 218 eine hohe Brillanz aufweist, aber eine geringe Intensität aufweist (bei kleinem Winkel) oder umgekehrt (bei großem Winkel).

Gemäß Ausführungsformen der vorliegenden Erfindung kann der Austrittswinkel des ursprünglichen Primärröntgenstrahls 145 relativ zu der Anode bzw. dem Elektronenzielbereich wie gewünscht gewählt werden, um eine optimale Intensität und/oder eine optimale Brillanz zu erzielen. Die optischen Elemente 102, 103 (und optional weitere optische Elemente) können derart innerhalb des Optiksystems 104 verbaut oder angeordnet sein, dass sie immer von einem gewünschten ursprünglichen Primärröntgenstrahl aus einem gewünschten oder optimalen Austrittswinkelbereich getroffen werden. Dies hat jedoch je nach ausgewähltem optischen Element bzw. auch je nach der Wellenlänge oder Energie der primären Röntgenstrahlung zur Folge, dass die Austrittswinkel der verschiedenen Optikelemente, das heißt die Richtungen der durch Interaktion mit den Optikelementen erzeugten Röntgenstrahlen, variieren. Um diese Variation in der Austrittsrichtung zu kompensieren, wird die Drehbühne 115 geeignet verdreht, um den erzeugten Primärröntgenstrahl auf die Probe treffen zu lassen. Gemäß Ausführungsformen der Erfindung ist die Drehbühnenachse 106 möglichst nahe an dem Goniometermittelpunkt bzw. der Goniometerachse 109 des Goniometerarms 114 angeordnet. Daher ändert sich bei Verdrehung der Drehbühne 115 der Abstand zwischen der Röntgenquelle 101 zur Goniometerachse 109 in einem geringeren Ausmaß als bei einer linearen Verschiebung, wie es herkömmlicherweise durchgeführt wurde. Damit ist ein sehr flexibles Diffraktometer bereitgestellt, wobei sämtliche Verfahrensschritte vollautomatisierbar sind.

Optional kann stromaufwärts des Detektors 112 eine Optik 111 angeordnet sein. Durch Beugung des jeweiligen Primärröntgenstrahls geht von der Probe Sekundärstrahlung 110 aus, welche von dem Detektor 112 (und optional Durchlaufen der Optik 111) detektiert wird.

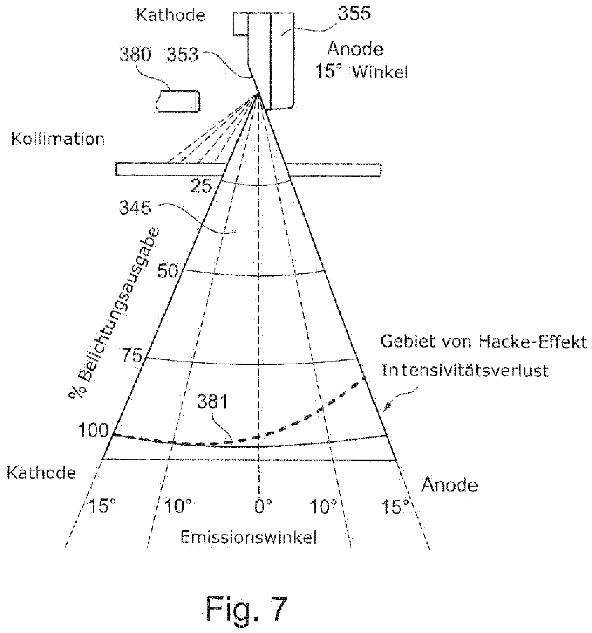

Fig. 7 illustriert exemplarisch eine Anode 355 mit einem Elektronenzielbereich 353. Durch Beschuss des Elektronenzielbereichs 353 mit Elektronen, welche von einer Kathode 380 ausgesandt werden, entsteht ursprüngliche Primärröntgenstrahlung 345. Die Intensität der ursprünglichen Primärröntgenstrahlung 345 variiert mit dem Austrittswinkel gemäß der Kurve 381. Ausführungsformen der vorliegenden Erfindung ermöglichen ein Einstellen der Optikkomponenten derart, dass eine gewünschte Intensität und gewünschte Brillanz des ursprünglichen Primärröntgenstrahls 345 in Interaktion mit einer gewünschten Optikkomponente kommt, um einen entsprechenden Primärröntgenstrahl gewünschter Charakteristik zu erzeugen, der nachfolgend auf die Probe trifft.

## Patentansprüche

1. Vorrichtung (100) zur Röntgenuntersuchung einer Probe, wobei die Vorrichtung aufweist:
ein Röntgenstrahlerzeugungssystem (130), mit:
einer Röntgenquelle (101) zum Erzeugen eines ursprünglichen Primärröntgenstrahls (145);
einem Optiksystem (104) mit einer ersten Optikkomponente (102) und mindestens einer zweiten Optikkomponente (103), die relativ zu der Röntgenquelle (101) verfahrbar sind, um wahlweise
die erste Optikkomponente (102) in Interaktion mit dem ursprünglichen Primärröntgenstrahl (145) zu bringen, woraufhin ein erster Primärröntgenstrahl (117) erzeugt ist, der unter einem ersten Ablenkwinkel (α1) abgelenkt ist, oder
die zweite Optikkomponente (103) in Interaktion mit dem ursprünglichen Primärröntgenstrahl (145) zu bringen, woraufhin ein zweiter Primärröntgenstrahl (118) erzeugt ist, der unter einem zweiten Ablenkwinkel (α2) abgelenkt ist; und
eine Drehvorrichtung (140) mit einer Drehbühne (115), auf der das Röntgenstrahlerzeugungssystem (130) montiert ist, um das Röntgenstrahlerzeugungssystem (130) wahlweise um einen ersten Drehwinkel (β1) oder einen zweiten Drehwinkel (β2) um eine Drehbühnenachse (106) zu verdrehen, um wahlweise den ersten Primärröntgenstrahl (117) oder den zweiten Primärröntgenstrahl (118) auf einen Probenbereich (147) treffen zu lassen.

2. Vorrichtung gemäß dem vorangehenden Anspruch, wobei ein Abstand (I) zwischen der Röntgenquelle (101), insbesondere einem Elektronenzielbereich (1153) auf deren Anode (155), und der Drehbühnenachse (106) zwischen 0,5 und 0,9 mal, insbesondere zwischen 0,6 und 0,8 mal, einem Abstand (r) zwischen der Goniometerachse (109) und der Röntgenquelle (101), insbesondere einem Elektronenzielbereich (153) auf deren Anode (155), ist.

3. Vorrichtung gemäß einem der vorangehenden Ansprüche, wobei eine Ablenkachse, um die der erste Primärröntgenstrahl (117) bzw. der zweite Primärröntgenstrahl (118) relativ zum ursprünglichen Primärröntgenstrahl (145) um den ersten Ablenkwinkel (α1) bzw. den zweiten Ablenkwinkel (α2) abgelenkt werden, parallel zur Drehbühnenachse (106) ist.

4. Vorrichtung gemäß einem der vorangehenden Ansprüche, ferner aufweisend:
einen Röntgendetektor (112);
ein Goniometer mit einem ersten Arm (114) und einem zweiten Arm (113), wobei der erste Arm und/oder der zweite Arm um eine Goniometerachse (109) verschwenkbar ist, wobei auf dem ersten Arm (114) die Drehbühne (115) mit dem Röntgenstrahlerzeugungssystem (130) montiert ist und wobei auf dem zweiten Arm (113) der Röntgendetektor (112) montiert ist.

5. Vorrichtung gemäß dem vorangehenden Anspruch, wobei die Drehbühnenachse (106) parallel zu der Goniometerachse (109) ist und wobei der Probenbereich (147) bei der Goniometerachse (109) angeordnet ist.

6. Vorrichtung gemäß einem der Ansprüche 4 oder 5, wobei die Drehbühnenachse (106) versetzt zur Goniometerachse (109) angeordnet ist, insbesondere zwischen dem Röntgenstrahlerzeugungssystem und der Goniometerachse angeordnet ist.

7. Vorrichtung gemäß einem der vorangehenden Ansprüche, wobei zumindest eine der Optikkomponenten (102, 103) ausgebildet ist, aus dem ursprünglichen Primärröntgenstrahl (145) einen monochromatischen oder polychromatischen Primärröntgenstrahl zu erzeugen, der parallel oder divergent oder fokussierend kollimierend ist.

8. Vorrichtung gemäß einem der vorangehenden Ansprüche, wobei zumindest eine der Optikkomponenten (102, 103) eine oder mehrere der folgenden Komponenten aufweist:
einen kollimierenden Röntgenspiegel,
einen fokussierenden Röntgenspiegel,
einen Vielschicht-Röntgenspiegel,
einen Vielschicht-Monochromator,
eine Einkristall-Optik,
einen 1D-Spiegel,
einen 2D-Spiegel.

9. Vorrichtung gemäß einem der vorangehenden Ansprüche, wobei die Optikkomponenten (102, 103) relativ zu der Röntgenquelle (101) linear im Wesentlichen senkrecht zum ursprünglichen Primärröntgenstrahl (145) verfahrbar sind.

10. Vorrichtung gemäß einem der vorangehenden Ansprüche, wobei das Optiksystem (104) einen auf der Drehbühne (115) montierten, relativ zur Röntgenquelle (101) verschiebbaren Schlitten aufweist, auf dem die Optikkomponenten montiert sind, wobei der Schlitten insbesondere auf einer Schiene angeordnet und relativ zu der Schiene verfahrbar ist.

11. Vorrichtung gemäß einem der vorangehenden Ansprüche, wobei die erste Optikkomponente (102) und die zweite Optikkomponente (103) wahlweise derart verfahrbar sind, dass der ursprüngliche Primärröntgenstrahl (145) jeweils unter einem gleichen optimalen oder gewünschten Winkelbereich relativ zu einem Elektronenzielbereich (153) auf der Anode (155) der Röntgenquelle (101) aus der Röntgenquelle austritt und auf die erste Optikkomponente (102) bzw. zweite Optikkomponente (103) trifft.

12. Vorrichtung gemäß einem der vorangehenden Ansprüche, wobei zumindest eine der Optikkomponenten (102, 103) um eine Optikdrehachse parallel zur Drehbühnenachse (106) verdrehbar ist.

13. Vorrichtung gemäß einem der vorangehenden Ansprüche, wobei der ursprüngliche Primärröntgenstrahl (145) hinter Austritt aus der Röntgenquelle (101) und vor Eintritt in das Optiksystem (104) nicht abgelenkt wird.

14. Vorrichtung gemäß einem der vorangehenden Ansprüche, ferner aufweisend:
eine Aperfurblende (105), im Wesentlichen senkrecht zum ersten und/oder zweiten Primärröntgenstrahl bezüglich Aperturposition und/oder Aperturgröße veränderbar, insbesondere höhenverstellbar und/oder breitenverstellbar, die stromabwärts des Optiksystems (104) auf der Drehbühne (115) montiert ist, insbesondere zwischen dem Optiksystem und der Drehbühnenachse angeordnet.

15. Vorrichtung gemäß einem der vorangehenden Ansprüche, wobei der ursprüngliche Primärröntgenstrahl (145) durch Beschuss eines einzigen Elektronenzielbereichs (153) auf einer Anode (155) der Röntgenquelle (101) erzeugt ist, um aus dem ursprünglichen Primärröntgenstrahl (101) sowohl den ersten Primärröntgenstrahl (117) als auch den zweiten Primärröntgenstrahl (118) zu erzeugen, wenn die erste Optikkomponente (102) bzw. die zweite Optikkomponente (103) von dem ursprünglichen Primärröntgenstrahl (145) getroffen wird.

16. Vorrichtung gemäß einem der vorangehenden Ansprüche, wobei die Röntgenquelle (101), insbesondere der Elektronenzielbereich (153) auf einer Anode (155) der Röntgendetektor (112) und der Probenbereich (147) im Wesentlichen in Bragg-Brentano-Geometrie angeordnet sind.

17. Vorrichtung gemäß einem der vorangehenden Ansprüche, ferner aufweisend:
eine Steuerung (160), die ausgebildet ist, in Abhängigkeit eines Verfahrweges der Optikkomponenten (102, 103) einen Drehwinkel der Drehbühne (115) einzustellen.

18. Vorrichtung gemäß einem der vorangehenden Ansprüche, ferner aufweisend:
eine Probenhalterung (108), die ausgebildet ist, die Probe in dem Probenbereich (147) zu haltern.

19. Verfahren einer Röntgenuntersuchung einer Probe, wobei das Verfahren aufweist:
Erzeugen eines ursprünglichen Primärröntgenstrahls (147) mittels einer Röntgenquelle (101) eines Röntgenstrahlerzeugungssystems (130), das ferner ein Optiksystem (104) mit einer ersten Optikkomponente (102) und mindestens einer zweiten Optikkomponente (103), die relativ zu der Röntgenquelle (101) verfahrbar sind, aufweist;
In Interaktion Bringen der ersten Optikkomponente (102) des Optiksystems (104) mit dem ursprünglichen Primärröntgenstrahl (145), um einen ersten Primärröntgenstrahl (117) zu erzeugen, der unter einem ersten Ablenkwinkel (a 1) abgelenkt ist, wobei eine Drehvorrichtung (140) eine Drehbühne (115) aufweist, auf der das Röntgenstrahlerzeugungssystem (130) montiert ist und die bei einem ersten Drehwinkel (β1) eingestellt ist, um den ersten Primärröntgenstrahl (117) auf einen Probenbereich (147) treffen zu lassen;
insbesondere Erfassen von ersten Beugungsdaten,
wobei das Verfahren ferner aufweist:
Verfahren der ersten Optikkomponente (102) und der zweiten Optikkomponente (103) des Optiksystems (104) relativ zu der Röntgenquelle (101), um die zweite Optikkomponente (103) in Interaktion mit dem ursprünglichen Primärröntgenstrahl (145) zu bringen, um einen zweiten Primärröntgenstrahl (118) zu erzeugen, der unter einem zweiten Ablenkwinkel (α2) abgelenkt ist; und
Verdrehen der Drehbühne (115) auf einen zweiten Drehwinkel (ß1) um eine Drehbühnenachse (108), um den zweiten Primärröntgenstrahl (118) auf den Probenbereich (147) treffen zu lassen;
insbesondere Erfassen von zweiten Beugungsdaten.

## Claims

1. An apparatus (100) for X-ray examination of a sample, the apparatus comprising:
an X-ray generating system (130), comprising:
an X-ray source (101) for generating an original primary X-ray beam (145);
an optical system (104) comprising a first optical component (102) and at least one second optical component (103) which are movable relative to the X-ray source (101) for selectively
bringing the first optical component (102) into interaction with the original primary X-ray beam (145), whereupon a first primary X-ray beam (117) is generated which is deflected at a first deflection angle (α1), or
bringing the second optical component (103) into interaction with the original primary X-ray beam (145), whereupon a second primary X-ray beam (118) is generated which is deflected at a second deflection angle (α2); and
a rotating device (140) having a rotating stage (115) on which the X-ray generating system (130) is mounted for selectively rotating the X-ray generating system (130) through a first angle of rotation (β1) or a second angle of rotation (β2) about a rotating stage axis (106) to selectively cause the first primary X-ray beam (117) or the second primary X-ray beam (118) to impinge on a sample region (147).

2. The apparatus according to the preceding claim, wherein a distance (I) between the X-ray source (101), in particular an electron target region (1153) on its anode (155), and the rotation stage axis (106) is between 0.5 and 0.9 times, in particular between 0.6 and 0.8 times, a distance (r) between the goniometer axis (109) and the X-ray source (101), in particular an electron target region (153) on its anode (155).

3. The apparatus according to any one of the preceding claims, wherein a deflection axis about which the first primary X-ray beam (117) or the second primary X-ray beam (118) is deflected relative to the original primary X-ray beam (145) by the first deflection angle (α1) or the second deflection angle (α2), respectively, is parallel to the rotation stage axis (106).

4. The apparatus according to any one of the preceding claims, further comprising:
an X-ray detector (112);
a goniometer having a first arm (114) and a second arm (113), the first arm and/or the second arm being pivotable about a goniometer axis (109), wherein the rotary stage (115) with the X-ray beam generating system (130) is mounted on the first arm (114) and wherein the X-ray detector (112) is mounted on the second arm (113).

5. The apparatus according to the preceding claim, wherein the rotary stage axis (106) is parallel to the goniometer axis (109) and wherein the sample region (147) is located at the goniometer axis (109).

6. The apparatus according to any one of claims 4 or 5, wherein the rotating stage axis (106) is arranged offset from the goniometer axis (109), in particular arranged between the X-ray generating system and the goniometer axis.

7. The apparatus according to any one of the preceding claims, wherein at least one of the optical components (102, 103) is adapted to generate from the original primary X-ray beam (145) a monochromatic or polychromatic primary X-ray beam which is parallel or divergent or focusing collimating.

8. The apparatus according to any one of the preceding claims, wherein at least one of the optical components (102, 103) comprises one or more of the following components:
a collimating X-ray mirror,
a focusing X-ray mirror,
a multilayer X-ray mirror,
a multilayer monochromator,
a single crystal optics,
a 1D mirror,
a 2D mirror.

9. The apparatus according to any one of the preceding claims, wherein the optical components (102, 103) are linearly movable relative to the X-ray source (101) substantially perpendicular to the original primary X-ray beam (145).

10. The apparatus according to any one of the preceding claims, wherein the optical system (104) comprises a carriage mounted on the rotary stage (115) and displaceable relative to the X-ray source (101), on which carriage the optical components are mounted, the carriage being arranged in particular on a rail and displaceable relative to the rail.

11. The apparatus according to any one of the preceding claims, wherein the first optical component (102) and the second optical component (103) are selectively movable such that the original primary X-ray beam (145) exits the X-ray source at the same optimum or desired angular range relative to an electron target region (153) on the anode (155) of the X-ray source (101) and impinges on the first optical component (102) and the second optical component (103), respectively.

12. The apparatus according to any one of the preceding claims, wherein at least one of the optical components (102, 103) is rotatable about an optical rotation axis parallel to the rotation stage axis (106).

13. The apparatus according to any one of the preceding claims, wherein the original primary X-ray beam (145) is not deflected after exiting the X-ray source (101) and before entering the optical system (104).

14. The apparatus according to any one of the preceding claims, further comprising:
an aperture diaphragm (105), essentially perpendicular to the first and/or second primary X-ray beam, variable with respect to aperture position and/or aperture size, in particular height-adjustable and/or width-adjustable, which is mounted downstream of the optical system (104) on the rotating stage (115), in particular arranged between the optical system and the rotating stage axis.

15. The apparatus according to any one of the preceding claims, wherein the original primary X-ray beam (145) is generated by bombarding a single electron target region (153) on an anode (155) of the X-ray source (101) to generate both the first primary X-ray beam (117) and the second primary X-ray beam (118) from the original primary X-ray beam (101) when the first optical component (102) and the second optical component (103), respectively, are hit by the original primary X-ray beam (145).

16. The apparatus according to any one of the preceding claims, wherein the X-ray source (101), in particular the electron target region (153) on an anode (155), the X-ray detector (112) and the sample region (147) are arranged substantially in Bragg-Brentano geometry.

17. The apparatus according to any one of the preceding claims, further comprising:
a controller (160) which is configured to set a rotation angle of the rotation stage (115) as a function of a travel path of the optical components (102, 103).

18. The apparatus according to any one of the preceding claims, further comprising: a sample holder (108) adapted to hold the sample in the sample region (147).

19. A method of X-ray examination of a sample, wherein the method comprises:
generating an original primary X-ray beam (147) by means of an X-ray source (101) of an X-ray beam generating system (130) further comprising an optical system (104) having a first optical component (102) and at least one second optical component (103) movable relative to the X-ray source (101);
interacting the first optical component (102) of the optical system (104) with the original primary X-ray beam (145) to generate a first primary X-ray beam (117) deflected at a first deflection angle (a 1), wherein a rotation device (140) comprises a rotation stage (115) on which the X-ray beam generating system (130) is mounted and which is set at a first rotation angle (β1) to cause the first primary X-ray beam (117) to impinge on a sample region (147);
in particular the acquisition of first deflection data,
wherein the method further comprises:
moving the first optical component (102) and the second optical component (103) of the optical system (104) relative to the X-ray source (101) to bring the second optical component (103) into interaction with the original primary X-ray beam (145) to produce a second primary X-ray beam (118) deflected at a second deflection angle (α2); and
rotating the rotating stage (115) to a second angle of rotation (β1) about a rotating stage axis (108) to cause the second primary X-ray beam (118) to impinge on the sample region (147);
in particular the acquisition of second deflection data.

## Revendications

1. Dispositif (100) permettant d'examiner un échantillon par rayons X, dans lequel le dispositif comprend :
un système générateur de faisceau de rayons X (130), avec :
une source de rayons X (101) permettant de générer un faisceau de rayons X primaire (145) initial ;
un système optique (104) avec un premier composant optique (102) et au moins un second composant optique (103) qui peuvent être déplacés par rapport à la source de rayons X (101) afin de
faire interagir le premier composant optique (102) avec le faisceau de rayons X primaire (145) initial, ce qui génère un premier faisceau de rayons X primaire (117) qui est dévié en dessous d'un premier angle de déviation (α1), ou
faire interagir le second composant optique (103) avec le faisceau de rayons X primaire (145) initial, ce qui génère un second faisceau de rayons X primaire (118) qui est dévié en dessous d'un second angle de déviation (α2) ; et
un dispositif rotatif (140) muni d'un plateau rotatif (115) sur lequel est monté le système générateur de faisceau de rayons X (130), afin de faire tourner le système générateur de faisceau de rayons X (130) selon un premier angle de rotation (β1) ou selon un second angle de rotation (β2) autour d'un axe de plateau rotatif (106), afin de permettre au premier faisceau de rayons X primaire (117) ou au second faisceau de rayons X primaire (118) d'atteindre une région d'échantillon (147).

2. Dispositif selon la revendication précédente, dans lequel une distance (I) entre la source de rayons X (101), en particulier une région cible pour électrons (153) située sur l'anode (155) de ladite source de rayons X, et l'axe de plateau rotatif (106) est comprise entre 0,5 et 0,9 fois, en particulier entre 0,6 et 0,8 fois, une distance (r) entre l'axe de goniomètre (109) et la source de rayons X (101), en particulier une région cible pour électrons (153) située sur l'anode (155) de ladite source de rayons X.

3. Dispositif selon l'une quelconque des revendications précédentes, dans lequel un axe de déviation, autour duquel le premier faisceau de rayons X primaire (117) ou le second faisceau de rayons X primaire (118) sont déviés par rapport au faisceau de rayons X primaire (145) initial selon le premier angle de déviation (α1) ou le second angle de déviation (α2), est parallèle à l'axe de plateau rotatif (106).

4. Dispositif selon l'une quelconque des revendications précédentes, comprenant en outre :
un détecteur de rayons X (112) ;
un goniomètre avec un premier bras (114) et un second bras (113), dans lequel le premier bras et/ou le second bras peut pivoter autour d'un axe de goniomètre (109), dans lequel le plateau rotatif (115) est monté avec le système générateur de faisceau de rayons X (130) sur le premier bras (114) et dans lequel le détecteur de rayons X (112) est monté sur le second bras (113).

5. Dispositif selon la revendication précédente, dans lequel l'axe de plateau rotatif (106) est parallèle à l'axe de goniomètre (109) et dans lequel la région d'échantillon (147) est agencée près de l'axe de goniomètre (109).

6. Dispositif selon l'une quelconque des revendications 4 ou 5, dans lequel l'axe de plateau rotatif (106) est agencé de manière décalée par rapport à l'axe de goniomètre (109), en particulier est agencé entre le système générateur de faisceau de rayons X et l'axe de goniomètre.

7. Dispositif selon l'une quelconque des revendications précédentes, dans lequel au moins un des composants optiques (102, 103) est conçu pour générer, à partir du faisceau de rayons X primaire (145) initial, un faisceau de rayons X primaire monochromatique ou polychromatique qui est parallèle ou divergent ou focalisé en collimation.

8. Dispositif selon l'une quelconque des revendications précédentes, dans lequel au moins un des composants optiques (102, 103) présente un ou plusieurs des composants ci-dessous :
un miroir à rayons X collimateur,
un miroir à rayons X focalisateur,
un miroir à rayons X multicouche,
un monochromateur multicouche,
une optique monocristalline,
un miroir 1D,
un miroir 2D.

9. Dispositif selon l'une quelconque des revendications précédentes, dans lequel les composants optiques (102, 103) peuvent être déplacés par rapport à la source de rayons X (101) de manière linéaire et essentiellement perpendiculaire au faisceau de rayons X primaire (145) initial.

10. Dispositif selon l'une quelconque des revendications précédentes, dans lequel le système optique (104) présente un chariot monté sur le plateau rotatif (115) et pouvant être déplacé par rapport à la source de rayons X (101) et sur lequel sont montés les composants optiques, dans lequel le chariot est en particulier agencé sur un rail et peut être déplacé par rapport au rail.

11. Dispositif selon l'une quelconque des revendications précédentes, dans lequel le premier composant optique (102) et le second composant optique (103) peuvent être déplacés sélectivement de telle manière que le faisceau de rayons X primaire (145) initial sort de la source de rayons X respectivement en dessous d'une même plage angulaire optimale ou souhaitée par rapport à une région cible pour électrons (153) située sur l'anode (155) de la source de rayons X (101) et atteint le premier composant optique (102) ou le second composant optique (103).

12. Dispositif selon l'une quelconque des revendications précédentes, dans lequel au moins un des composants optiques (102, 103) peut tourner autour d'un axe de rotation d'optique parallèle à l'axe de plateau rotatif (106).

13. Dispositif selon l'une quelconque des revendications précédentes, dans lequel le faisceau de rayons X primaire (145) initial n'est pas dévié après sa sortie de la source de rayons X (101) et avant son entrée dans le système optique (104).

14. Dispositif selon l'une quelconque des revendications précédentes, présentant en outre :
un diaphragme d'ouverture (105) qui est monté sur le plateau rotatif (115) en aval du système optique (104), en particulier qui est agencé entre le système optique et l'axe de plateau rotatif, et dont la position d'ouverture et/ou la taille d'ouverture peuvent être modifiée(s), en particulier ajustée(s) en hauteur et/ou en largeur, de manière essentiellement perpendiculaire au premier et/ou au second faisceau de rayons X primaire.

15. Dispositif selon l'une quelconque des revendications précédentes, dans lequel le faisceau de rayons X primaire (145) initial est généré en bombardant une région cible pour électrons (153) unique située sur une anode (155) de la source de rayons X (101) afin de générer à la fois le premier faisceau de rayons X primaire (117) et le second faisceau de rayons X primaire (118) à partir du faisceau de rayons X primaire (101) initial lorsque le premier composant optique (102) ou le second composant optique (103) est atteint par le faisceau de rayons X primaire (145) initial.

16. Dispositif selon l'une quelconque des revendications précédentes, dans lequel la source de rayons X (101), en particulier la région cible pour électrons (153) située sur une anode (155) du détecteur de rayons X (112), et la région d'échantillon (147) sont agencées essentiellement selon une géométrie de Bragg-Brentano.

17. Dispositif selon l'une quelconque des revendications précédentes, présentant en outre :
une commande (160) conçue pour ajuster un angle de rotation du plateau rotatif (115) en fonction d'une course de déplacement des composants optiques (102, 103).

18. Dispositif selon l'une quelconque des revendications précédentes, présentant en outre :
un support d'échantillon (108) conçu pour retenir l'échantillon dans la région d'échantillon (147).

19. Procédé d'examen par rayons X d'un échantillon, dans lequel le procédé comprend les étapes consistant à :
générer un faisceau de rayons X primaire (145) initial au moyen d'une source de rayons X (101) d'un système générateur de faisceau de rayons X (130) présentant en outre un système optique (104) muni d'un premier composant optique (102) et d'au moins un second composant optique (103) pouvant être déplacé par rapport à la source de rayons X (101) ;
faire interagir le premier composant optique (102) du système optique (104) avec le faisceau de rayons X primaire (145) initial afin de générer un premier faisceau de rayons X primaire (117) qui est dévié en dessous d'un premier angle de déviation (α1), dans lequel un dispositif rotatif (140) présente un plateau rotatif (115) sur lequel est monté le système générateur de faisceau de rayons X (130) et qui est ajusté selon un premier angle de rotation (β1) afin que le premier faisceau de rayons X primaire (117) atteigne une région d'échantillon (147) ;
en particulier enregistrer des premières données de diffraction,
dans lequel le procédé comprend en outre les étapes consistant à :
déplacer le premier composant optique (102) et le second composant optique (103) du système optique (104) par rapport à la source de rayons X (101) afin de faire interagir le second composant optique (103) avec le faisceau de rayons X primaire (145) initial afin de générer un second faisceau de rayons X primaire (118) dévié en dessous d'un second angle de déviation (α2) ; et
faire tourner le plateau rotatif (115) autour d'un axe de plateau rotatif (108) selon un second angle de rotation (β1) afin de permettre au second faisceau de rayons X primaire (118) d'atteindre la région d'échantillon (147) ;
en particulier enregistrer des secondes données de diffraction.
